(19) **Europäisches Patentamt**

**European Patent Office**

**Office européen des brevets**

(11) **EP 0 904 563 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.⁷: **G03B 27/73**, G03B 15/00

(21) Anmeldenummer: **97927183.0**

(86) Internationale Anmeldenummer:
**PCT/EP97/03105**

(22) Anmeldetag: **13.06.1997**

(87) Internationale Veröffentlichungsnummer:
**WO 97/48011 (18.12.1997 Gazette 1997/54)**

(54) **VERFAHREN UND VORRICHTUNG ZUR AUSGABE ELEKTRONISCHER BILDSIGNALE SOWIE FOTOGRAFISCHES KOPIERGERÄT**

PROCESS AND DEVICE FOR THE OUTPUT OF ELECTRONIC IMAGE SIGNALS, AND A PHOTOGRAPHIC COPIER

PROCEDE ET DISPOSITIF POUR LA SORTIE DE SIGNAUX D'IMAGES ELECTRONIQUES, ET COPIEUR PHOTOGRAPHIQUE

(84) Benannte Vertragsstaaten:
**CH DE FR IT LI**

(30) Priorität: **14.06.1996 DE 19623835**

(43) Veröffentlichungstag der Anmeldung:
**31.03.1999 Patentblatt 1999/13**

(73) Patentinhaber: **AGFA-GEVAERT AG
51301 Leverkusen (DE)**

(72) Erfinder:
• **KLÜTER, Ulrich
D-80638 München (DE)**

• **AUER, Josef
D-82008 Unterhaching (DE)**

(56) Entgegenhaltungen:
**EP-A- 0 697 629**

• **PATENT ABSTRACTS OF JAPAN vol. 18, no. 223 (P-1729), 21.April 1994 & JP 06 019010 A (BROTHER IN. LTD.), 28.Januar 1994,**
• **PATENT ABSTRACTS OF JAPAN vol. 96, no. 4, 30.April 1996 & JP 07 319078 A (SONY CORP.), 8.Dezember 1995,**
• **PATENT ABSTRACTS OF JAPAN vol. 97, no. 1, 31.Januar 1997 & JP 08 227107 A (FUJI PHOTO FILM CO. LTD.), 3.September 1996,**

**Beschreibung**

Die Erfindung betrifft ein Verfahren und eine Vorrichtung zur Ausgabe elektronischer Bildsignale nach dem Oberbegriff des Anspruchs 1 sowie ein fotografisches Kopiergerät, welches eine solche Vorrichtung enthält.

Die konventionelle Fotografie auf der Basis von Silberhalogenidfilm wird sowohl aufnahmeseitig, z. B. bei Kameras, als auch im Zuge der späteren Verarbeitung des Films zunehmend durch elektronische Komponenten ergänzt. Beispielsweise können in modernen Kameras ohne weiteres zusätzliche Informationen wie Aufnahmedatum, Grußtexte oder sonstige Informationen bildbezogen in der Kamera auf den Film aufgezeichnet werden. In diesem Zusammenhang wurden seit einiger Zeit auch Filme bekannt, die eine magnetische Aufzeichnungsschicht tragen, über die die Information von der Kamera auf den Film für spätere Verarbeitungsschritte des Films zur Verfügung gestellt wird. Ein derartiger Film und eine entsprechende Verarbeitungsprozedur ist z. B. aus der US-5,029,313 A bekannt-geworden.

Des weiteren ist es häufig gewünscht, zusätzliche Informationen wie Grußtexte im Zuge der späteren Verarbeitung, d. h. nach dem fotografischen Entwickeln des Films, auf oder neben die davon erstellten Fotoabzüge zu drucken. Immer häufiger wird auch gewünscht, Bilder in fotografischer Qualität direkt von einer elektronischen Bildquelle, z. B. einem Computer oder einem Vorlagenscanner, auf Fotomaterial auszugeben.

In Fotofinishing-Prozessen werden immer häufiger sog. Indexprints erstellt. Die US-5,447,827 A zeigt einen solchen Prozeß. Hierbei werden alle Bilder eines fotografischen Films optoelektronisch abgetastet und elektronisch zu einem Bild zusammengesetzt, welches alle Einzelbilder des Films enthält. Die Einzelbilder werden mit entsprechenden Informationen wie Filmnummer, Bildnummer, Datum der Aufnahme, Motivtext o. ä. ergänzt und dieses Bild als Indexprint ausgegeben. Nachteilig bei diesem System ist, daß die Einrichtung zur Ausgabe der elektronischen Bildsignale relativ aufwendig ist und einen nicht unerheblichen Platzbedarf hat.

Im Zuge eines fotografischen Fotofinishing-Verfahrens werden sog. Offline-Indexprint-Systeme und Inline-Indexprint-Systeme unterschieden. In einem sog. Offline-Indexprint-System werden die Indexprint-Bilder getrennt von den übrigen Fotoabzügen auf einem separaten Drucker ausgegeben und den übrigen Bildern später zusortiert. In einem Inline-Indexprint-System werden die Indexprints dagegen gemeinsam mit den Einzel-Abzügen der einzelnen Bilder des fotografischen Films in ein und demselben Gerät erzeugt. Dieses Gerät ist also einerseits in der Lage, konventionelle Bilder optisch auf ein Kopiermaterial zu kopieren und andererseits elektronische Bildsignale auf das selbe Kopiermaterial auszugeben. Der Hauptvorteil eines Inline-Indexprint-Systems besteht darin, daß die Indexprints bereits in richtiger Zuordnung zu den Bildern des Fotoauftrages erzeugt werden. Der Aufwand des Sortierens ist deshalb nicht mehr nötig.

Aus der EP 0 697 629 A ist ein fotografisches Kopiergerät bekannt, mit einer einschwenkbaren LCD-Matrix zur Ausgabe von zusätzlichen Informationen auf dem lichtempfindlichen Material.

Aus der JP 6-19 106 A ist eine Vorrichtung zur Ausgabe elektronischer Bildsignale auf lichtempfindliches Aufzeichnungsmaterial bekannt. Bildsignale werden dabei auf einem Anzeigeelement dargestellt und direkt auf Aufzeichnungsmaterial gerichtet.

Aus der DE 38 25 887 C2 ist eine Video-Druckeinrichtung zum Ausdrucken verschiedener Einzelbilder auf einem gemeinsamen Ausgabeblatt beschrieben. Die beiden zuletzt genannten Veröffentlichungen betreffen vollelektronische Systeme, die nicht ohne weiteres geeignet sind zur Integration in ein fotografisches Kopiergerät, bei dem eine Bildvorlage eines fotografischen Films auf lichtempfindliches Material optisch kopierbar ist.

Aus der DE 41 13 594 A1 ist eine Druckschriften-Kopiervorrichtung mit einer einklappbaren Kalibrier-Musterstruktur bekannt.

Es ist Aufgabe der Erfindung, ein Verfahren und ein Kopiergerät anzugeben, bei denen elektronische Bildinformatione in hoher, d. h. möglichst fotografischer Qualität auf ein lichtempfindliches Aufzeichnungsmaterial ausgegeben werden können.

Diese Aufgabe wird durch die im Anspruch 1 angegebenen Merkmale sowie durch die Merkmale des Kopiergeräts gemäß Anspruch 6 gelöst.

Erfindungsgemäß ist vorgesehen, daß ein transmissives Anzeigeelement mit den Bildsignalen angesteuert wird und von mindestens einer Lichtquelle in Richtung zum lichtempfindlichen Aufzeichnungsmaterial durchstrahlt wird. Als Anzeigeelement eignet sich insbesondere eine Flüssigkristallanzeige, aber auch eine andere, punktweise hinsichtlich ihrer Transmission steuerbare Lichtventil-Anordnung. Das Anzeigeelement befindet sich während der Bildausgabe so nahe am Aufzeichnungsmaterial, daß auf dem Aufzeichnungsmaterial ein scharfes Bild erzeugt wird, ohne daß zusätzliche fokussierende optische Mittel zwischen Anzeigeelement und Aufzeichnungsmaterial nötig sind. Mit dem Anzeigeelement wird zumindest annähernd eine Kontaktbelichtung durchgeführt. Die Bildsignale sind diskretisiert, insbesondere digitalisiert.

Die Erfindung eignet sich insbesondere dazu, fotografische Projektionskopiergeräte zur Ausgabe elektronischer Bildsignale von punktweise zusammengesetzten Bildern nachzurüsten. Dazu ist neben dem transmissiven Anzeigeelement lediglich eine Anpassung elektronischer Steuermittel nötig. Um ein Kopiergerät zwischen einem konventionellen Projektionsmodus, bei dem eine konventionelle Filmvorlage auf lichtempfindliches Aufzeichnungsmaterial (insbesondere eine Colornegativ-Filmvorlage auf ein Colornegativ-Aufzeichnungspapier) kopiert wird und einem vollelektronischen Modus, bei dem elektronische Bildsignale auf das Colornegativ-Papier ausgegeben werden, umschalten zu können, ist insbesondere vorgesehen, daß das Anzeigeelement zur Ausgabe des elektronischen Bildes in eine Beleuchtungsposition gebracht, insbesondere eingeschwenkt wird.

Statt einer Schwenkbewegung um eine Drehachse kann zum Einbringen des Anzeigeelements beispielsweise auch eine lineare Schiebebewegung vollzogen werden. Durch eine derartige Anpassung kann eine vorhandene, weiße Lichtquelle des konventionellen Projektionskopiergeräts dazu verwendet werden, einerseits eine konventionelle Kopie zu erstellen und andererseits das transmissive Anzeigeelement zu durchstrahlen, um die elektronischen Bildsignale auf lichtempfindliches Aufzeichnungsmaterial auszugeben. Zu diesem Zweck ist es insbesondere vorteilhaft, die Anzeigevorrichtung mittels einer Mattscheibe und eines Zoom-Objektivs, welche zwischen Lichtquelle und Anzeigeelement eingebracht sind, zu beleuchten. Das Zoom-Objektiv ist dabei doppelt nutzbar; einerseits zur scharfen Projektion einer konventionellen Kopiervorlage auf das Aufzeichnungsmaterial und andererseits zum Beleuchten des Anzeigeelements mit definierter Divergenz. Als Anzeigeelement eignet sich insbesonders eine Flüssigkristall-Anzeige.

Für eine derartige Nachrüstung ist es ebenfalls vorteilhaft, ein an sich bekanntes Testnegativ, welches bei Bedarf in den Beleuchtungsstrahlengang eingeschwenkt werden kann, mechanisch in Wirkverbindung mit dem Anzeigeelement zu bringen. Der Platzbedarf für beide Komponenten kann hierdurch minimiert werden.

Einzelheiten und vorteilhafte Ausführungsformen der Erfindung sind in den Unteransprüchen beschrieben und werden nachfolgend anhand einiger Ausführungsbeispiele und Figuren näher erläutert.

Es zeigen:

Fig. 1          ein fotografisches Minilabor-Gerät,

Fig. 2          eine Kopierstation mit integrierter Bildsignal-Ausgabeeinrichtung,

Fig. 3          einen Schnitt durch die Kopierstation der Fig. 2 entlang III-III,

Fig. 4          eine optische Prinzipskizze zur Beleuchtung einer Anzeigeeinrichtung,

Fig. 5          Details einer Belichtungsstation,

Fig. 6          ein Blockschaltbild der elektronischen Komponenten eines Belichtungsgerätes und die

Fig. 7 und 8          Übertragungsfunktionen einer Flüssigkristallanordnung.

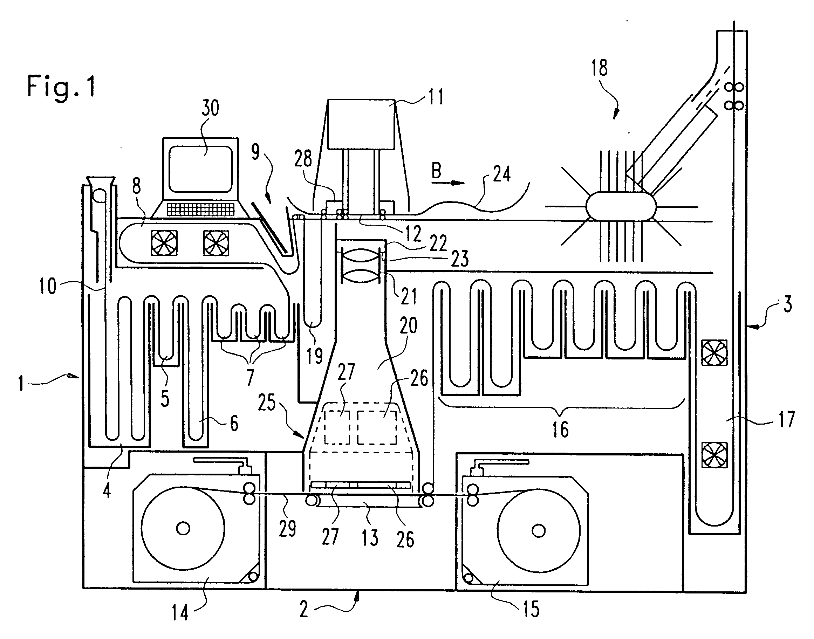

In Fig. 1 ist ein fotografisches Minilabor-Gerät gezeigt, in dem ein fotografischer Finishing-Prozeß weitgehend automatisch stattfindet. In dem Gerät sind alle wesentlichen, für das Erstellen von fotografischen Abzügen benötigten Komponenten enthalten. Es besteht aus einem Filmentwicklungsteil 1, einem fotografischen Kopiergerät 2 und einem Papierentwicklungsteil 3. Ein belichteter, zu entwickelnder Film 10 wird in den Filmentwicklungsteil 1 eingegeben. Dort sind Entwicklungsbecken 4 für die Filmentwicklung vorgesehen. Nach dem Entwickeln durchläuft der Film 10 ein Zwischenwässerungs-Becken 5, ein Becken 6 für die Bleichfixierung und mehrere Becken 7 für die Endwässerung. Anschließend wird der Film 10 in einer Trockeneinrichtung 8 mit warmer Luft getrocknet. An einer Filmübergabestation 9 wird der entwickelte Film 10 an das Kopiergerät 2 übergeben. Ein Zwischenspeicher 19 gleicht unterschiedliche Filmtransportgeschwindigkeiten zwischen Filmentwicklungsteil 1 und Kopiergerät 2 aus. An der Filmübergabestation 9 können auch einzelne, bereits entwickelte Filme 24 direkt in das Kopiergerät 2 eingeführt werden.

Im Kopiergerät 2 läuft der Film 10 bzw. 24 an der Kopierstation 2 über eine Vorlagenbühne 12. In der Kopierstation 2 wird der Film zunächst mit einem Scanner 28 punktweise optoelektronisch abgetastet. Daraus werden Kopierdaten berechnet. Der Film wird anschließend in umgekehrter Richtung durch die Kopierstation 2 transportiert. Jedes Einzelbild wird dabei entsprechend den errechneten Kopierdaten auf fotografisches Papier 29 kopiert. Eine Beleuchtungseinrichtung 11 beleuchtet dabei den Film 10, ein Objektiv 21 bildet eine zu kopierende Vorlage auf eine Papierbühne 13 scharf ab. Über die Papierbühne 13 wird das fotografische Colornegativ-Papier 29 geführt, indem es von einer der beiden Papierkassetten 14 oder 15 abgerollt wird. Das Objektiv 21 ist mit einem Bajonett-Verschluß 23 an einem Gehäuseteil 22 des Kopiergerätes 2 befestigt. Das Objektiv 21 befindet sich im Lichtschacht 20 des Kopiergerätes 2.

Nach Belichtung des Colornegativ-Papiers 29 durchläuft dieses mehrere chemische Behandlungsbäder 16 und wird anschließend in einem Trockner 17 getrocknet. Die fertigen, geschnittenen Papierbilder verlassen an einer Ausgabe- und Sammeleinrichtung 18 das Minilabor.

Innerhalb der Kopierstation 2 befindet sich eine Belichtungsstation 25 zur Ausgabe elektronischer Bildsignale. Die Belichtungsstation weist ein Anzeigeelement, bestehend aus einem Flüssigkristall (LCD) 26, auf. Sie ist innerhalb der Kopierstation 2 schwenkbar gelagert, so daß sie zwischen einer Belichtungsposition parallel zur Ebene der Papierbühne 13 und einer Ruhestellung, in der das LCD 26 senkrecht von der Papierbühne 13 und außerhalb des Beleuchtungsstrahlenganges weggeklappt ist, hin und her bewegt werden kann.

In Fig. 1 ist gestrichelt die Ruhestellung und mit durchgezogenen Linien die Belichtungsstellung gezeigt.

In der Belichtungsposition ist die Flüssigkristall-Anzeige 26 so nahe an der Papierbühne 13 bzw. am fotografischen Papier 29 positioniert, daß Bilder, die auf der Flüssigkristall-Anzeige zur Anzeige kommen, ohne Zwischenschaltung zusätzlicher, abbildender optischer Elemente scharf auf das fotografische Papier 29 belichtet werden können. Die Bildsignale können entweder mit dem im Minilabor integrierten Scanner 28 oder mit einem externen Scanner erfaßt werden, aber genausogut von anderen Bildquellen wie einer Foto-CD, einer Floppy-Disc oder über ein externes Daten-Netzwerk von anderen Computern stammen. Insbesondere können die Bildsignale von einem sog. Indexprint-Composer stammen, welcher alle Einzelbilder eines fotografischen Films zu einem gemeinsamen, mit entsprechenden Informationen wie Texten, Logos o. ä. versehenen Indexprint zusammenstellt.

Bevor oder während Bilder über die Flüssigkristall-Anzeige 26 auf das fotografische Papier 29 belichtet werden, können sie auf einem Monitor 30 vom Bediener betrachtet werden. Die Darstellung auf dem Monitor ist dabei durch spezielle elektronische Bildverarbeitungs-Maßnahmen so, daß das dargestellte Bild weitgehend dem auf dem fotografischen Papier 29 letztendlich erzeugten Bild ähnelt. Im vorliegenden Ausführungsbeispiel wird das auf der Flüssigkristall-Anzeige 26 dargestellte Bild von der Beleuchtungseinrichtung 11 über das Objektiv 21 beleuchtet und so durchstrahlt, daß das gewünschte Bild auf dem Fotopapier 29 zur Anzeige kommt.

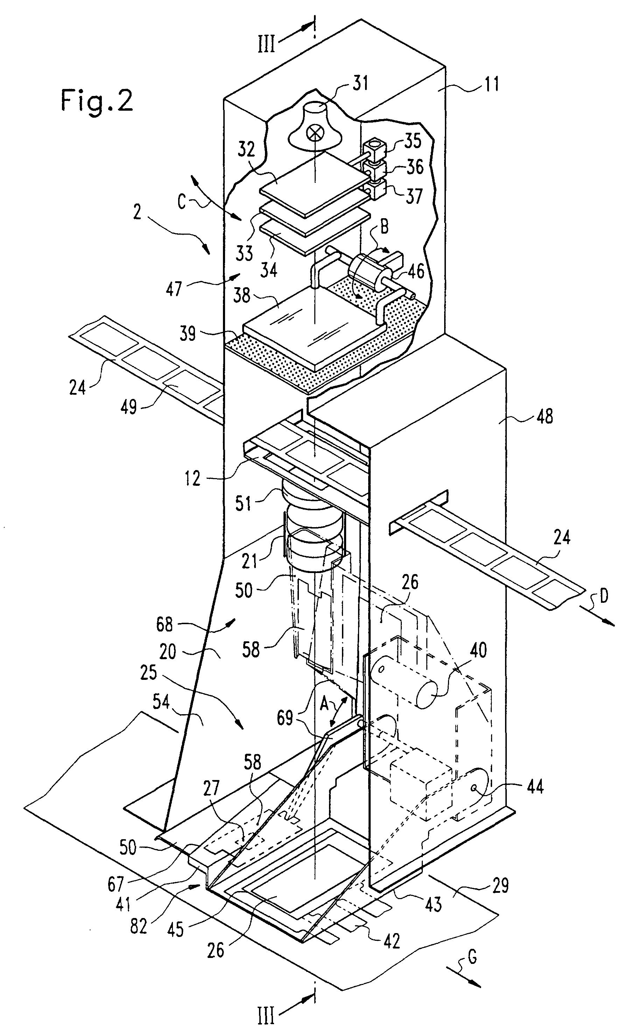

In Fig. 2 ist eine Kopierstation zum Kopieren fotografischer Filme 24 und zur Ausgabe elektronischer Bildsignale über die Belichtungsstation 25 dargestellt. Zum konventionellen Kopieren fotografischer Filme 24 ist die Flüssigkristall-Belichtungsstation 25 entlang Richtung A nach oben geschwenkt, so daß sie in der gestrichelt dargestellten Position steht. Zur Ausgabe elektronischer Bildsignale ist die Belichtungsstation 25 in die untere, mit durchgezogenen Linien gezeichnete Position geschwenkt, aber kein fotografischer Film 24 eingelegt. Der Film 24 wird hierzu in Richtung D aus der Kopierstation herausgezogen.

Die Beleuchtungseinrichtung 11 der Kopierstation beinhaltet eine Halogenlampe 31, eine Filteranordnung, umfassend einen Gelb-Filter 32, einen Magenta-Filter 33 sowie einen Cyan-Filter 34, welche von jeweils separat ansteuerbaren Drehmagneten 35, 36 und 37 in den Strahlengang des von der Lampe 31 abgestrahlten Lichts entlang Richtung C ein- bzw. ausschwenkbar sind. Unterhalb der Farbfilter 32, 33, 34 befindet sich eine entlang Richtung B schwenkbare Streuscheibe 38. Sie bewirkt, daß die Winkelverteilung des Lichts aufgeweitet wird, d. h. optisch weicher wird. Sie ist mit dem Antriebsmotor 46 automatisch verschwenkbar. Unterhalb dieser Streuscheibe 38 befindet sich eine zusätzliche, dünne Streufolie 39, welche fest in den Beleuchtungsschacht der Beleuchtungseinrichtung 11 eingebracht ist. Sie bewirkt eine geringere Aufweitung des Lichts als die Streuscheibe 38.

Ein Zoom-Objektiv 21 ist so ausgelegt, daß es Bildpunkte aus der Ebene, in der ein eingelegter Film 24 liegt, scharf auf die Ebene, in der das Kopierpapier 29 liegt, abbildet. Mit den Farbfiltern 32, 33, 34 wird jeweils für einen Farbauszug eine vorgegebene Belichtungszeit genau eingehalten. Mit dem Verschluß 51 wird der Lichtschacht 20 vor und nach dem Belichten, insbesondere während eines Papiertransports, völlig abgedunkelt.

Die Belichtungsstation 25 ist mittels eines Antriebs oder Gleichstrommotors entlang der Richtung A innerhalb des Beleuchtungsschachtes 47 schwenkbar. Die Belichtungsstation 25 ist dazu über einen Schwenkarm 43 und eine Drehachse 44, welche fest am Gehäuse 48 der Kopierstation 2 angebracht ist, montiert. Am Schwenkarm 43 ist eine Befestigungsplatte 41 fest angebracht, in der wiederum ein Rahmen 45 für die Flüssigkristall-Anzeige 26 sowie das Testnegativ 27 montiert ist. An der Seite der Befestigungsplatte 41, die der angeschrägten Seite 54 des Gehäuses 48 benachbart ist, ist ein flexibles, lichtdichtes Endstück 50 angebracht. Es ist um die Kante 67 der Befestigungsplatte 41 knickbar.

Der Rahmen 45 ist und die Befestigungsplatte 41 sind ebenfalls lichtundurchlässig. Der Rahmen 45 und die Befestigungsplatte 41 wirken deshalb gleichzeitig als Maske für die die Flüssigkristall-Anzeige 26. Die Befestigungsplatte 41 ist eine bewegbare Belichtungsbühne.

Die Flüssigkristall-Anzeige 26 ist über Flachband-Anschlußkabel punktweise hinsichtlich ihrer Transmission steuerbar. Auf einer aktiven Fläche von ca. 118 x 89 mm weist sie eine Auflösung von 1024 x 768 Punkten auf. Sie ist bis zu einem Kontrastverhältnis von 1 : 150 in 256 Graustufen (8 Bit) modulierbar. Um das optimale Kontrastverhältnis zu erzielen, sollte die Flüssigkristall-Anzeige mit parallelem Licht unter einem Winkel von 5 ° zu ihrer Flächennormale bestrahlt werden.

Die Beleuchtung der Flüssigkristall-Anzeige 26 erfolgt mit der Lichtquelle 31 durch das Zoom-Objektiv 21. Die Beleuchtung weicht bei diesem Ausführungsbeispiel vom Ideal eines parallelen Lichtbündels ab. Sie ist kegelförmig, d. h., die Fläche der Flüssigkristall-Anzeige wird mit variierenden Einstrahlwinkeln ausgeleuchtet.

Die Kopierstation 2 kann in zwei Betriebsweisen betrieben werden: in einem konventionellen Kopiermodus und in einem Modus zur Ausgabe elektronischer Bildsignale.

Im konventionellen Kopiermodus wird ein entwickelter, fotografischer Film 24 in die Kopierstation 2 eingelegt und in Richtung D weitertransportiert. Jede Bildvorlage 49 des Films 24 wird mit einer optoelektronischen Abtasteinrichtung 28 punktweise abgetastet. Die Abtasteinrichtung 28 kann aus einer Charged Coupled Device (CCD) oder aus einer Dioden-Anordnung, ggf. unter Zwischenschaltung von Farbfiltern, bestehen. Sie tastet jede Bildvorlage 49 in drei Grundfarben ab. Aus den abgetasteten Signalen werden Kopierlichtmengen berechnet, die Bildvorlage wird auf der Kopierbühne 12 positioniert und unter Zwischenschaltung der drei Farbfilter 32, 33, 34 in drei unterschiedlich lange Belichtungszeiten auf das Fotopapier 29 kopiert. Während des Kopiervorgangs ist die Mattscheibe 38 in den Beleuchtungs-Strahlengang eingeschwenkt, so daß das Kopierlicht relativ diffus, d. h. weich ist. Die Belichtungsvorrichtung 29 ist während dieses Standard-Kopiervorgangs aus dem Strahlengang seitlich herausgeschwenkt, wie in Fig. 2 mit gestrichelten Linien gezeigt. Dadurch kann jede Bildvorlage ungehindert auf das Fotopapier 29 kopiert werden. Das flexible Endstück 50 der Befestigungsplatte 41 ist dabei um die Kante 67 geknickt und liegt bündig an der seitlichen Begrenzung 68 des Lichtschachtes 20 bzw. am Gehäuse 48 an.

Bei manchen Fotoaufträgen ist es gewünscht, von dem entwickelten Film einen Indexprint zu erstellen. In diesem Fall werden die von der Abtasteinrichtung 28 erzeugten Bildsignale für jede Bildvorlage 49 in einem Bildspeicher zwischengespeichert. Nachdem alle Bildvorlagen 49 des Films 24 abgetastet wurden, werden die Bildsignale mit zusätzlichen Informationen wie Bildnummern, Zusatztexten etc. ergänzt. Die Zusatzinformationen können ebenfalls optoelektronisch vom Film abgetastet, von einer Magnetschicht des Films gelesen oder von einer anderen Informationsquelle zur Verfügung gestellt werden. Das elektronisch zusammengestellte Indexbild wird dann auf dem Fotopapier 29 im Anschluß an die Einzel-Belichtungen der Bildvorlage 49 aufbelichtet. Hierzu wird die Belichtungsvorrichtung 25 nach unten (in die mit durchgezogenen Linien gezeigte Stellung der Fig. 2) in die Position gebracht. Die Streuscheibe 38 im Beleuchtungsschacht 47 wird dagegen nach oben geklappt, d. h. in einen Bereich außerhalb des Strahlengangs. Die Belichtung erfolgt sequentiell in drei Schritten, wobei die Flüssigkristall-Anzeige 26 jeweils ein Teilbild schwarz-weiß darstellt: Auf der Flüssigkristall-Anzeige 26 wird zunächst nur das blaue Teilbild des Indexprints angezeigt. Es wird mit blauem Licht belichtet, indem der Gelb-Filter 32 aus dem Strahlengang ausgeschwenkt ist, während die Filter 33 und 34 in den Licht-Strahlengang eingeschwenkt bleiben.

Nach der Blau-Teilbelichtung wird auf dem LCD das grüne Teilbild angezeigt und mit grünem Licht belichtet. Schließlich wird nur das rote Teilbild auf der LCD angezeigt und mit rotem Licht belichtet.

Es hat sich gezeigt, daß eine Bildfläche von mindestens 50 x 40 mm auf der Flüssigkristall-Anzeige vorteilhaft ist, um Indexprints für fotografische Aufträge in ausreichender Größe und Qualität erzeugen zu können. Die Fläche von 118 mm x 89 mm hat sich dabei als besonders geeignet herausgestellt. Bei Papierbreiten des Kopierpapiers 29 von 3,5", 4", 5" und 6" ist es vorteilhaft, zur Erzeugung von Indexprints die möglichen Längen fotografischer Filme 24 in zwei Klassen einzuteilen. In einer ersten Klasse (z. B. Filmformat 135 bis zu 28 Bildern) lassen sich Indexprints mit der Flüssigkristall-Anzeige 26 in einem einzigen Belichtungsvorgang anfertigen. Alle längeren Filme mit mehr Bildern sind dagegen in zwei Belichtungsvorgängen zu belichten. Der Indexprint wird dazu in zwei Bildhälften unterteilt, und beide Bildhälften werden nacheinander unter Zwischenschaltung eines Papiertransports quer zu einer Bildseite entlang der Richtung G nebeneinander auf das Kopierpapier 29 kopiert. Damit lassen sich Indexprints erzeugen, die doppelt so groß sind wie die Anzeigefläche der Flüssigkristall-Anzeige 26. Die Festlegung, ob ein Bild auf dem Papier 29 in einem oder zwei Belichtungsvorgängen erzeugt wird, kann nach der Anzahl der Bilder auf dem Film 24 und/oder nach dem Format des zu erzeugenden Bildes getroffen werden. Dies gilt sowohl für Indexbilder als auch für die Ausgabe elektronisch vorliegender Einzelbilder

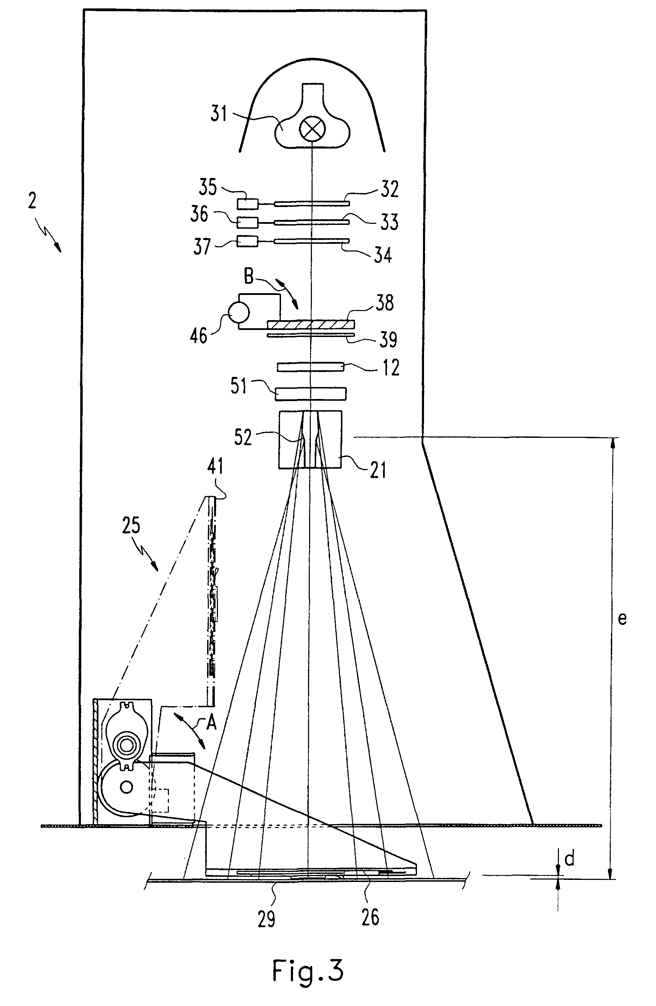

In Fig. 3 ist ein Schnitt durch die Fig. 2 entlang der Linie III-III dargestellt. Die Belichtungseinrichtung 25 ist in den beiden Stellungen innerhalb und außerhalb des Licht-Strahlengangs gezeigt. In der zweiten Stellung, innerhalb des Licht-Strahlengangs, befindet sich die Flüssigkristall-Anzeige 26 nahezu in Kontakt mit dem Fotopapier 29. Der Abstand d beträgt nur 5 mm. LCD 26 und Fotopapier 29 könnten auch etwas weiter voneinander entfernt sein, z. B. 6, 7, 8 oder sogar 10 mm oder auch vollständig in Kontakt miteinander gebracht werden; dann müßte allerdings bei einem Papier-Transport das LCD 26 vorübergehend angehoben werden, um Kratzer auf dem Papier 29 zu vermeiden. Der Abstand d darf aber nicht zu groß werden, sonst wird das auf dem Fotopapier 29 erzeugte Bild der LCD 26 unscharf. Die Beleuchtung des LCD 26 erfolgt von der Halogenlampe 31 über die Filter 32, 33, 34 und die Streufolie 39 durch das Zoom-Objektiv 21. Die Austrittspupille 52 des Objektivs 22 befindet sich in einem Abstand e von ca. 420 mm über der Ebene des Kopierpapiers 29.

Die Beleuchtung der Flüssigkristall-Anzeige 26 erfolgt idealerweise mit parallelem Licht. Im vorliegenden Ausführungsbeispiel weicht sie jedoch von diesem Ideal ab. Die Flüssigkristall-Anzeige wird mit einem kegelförmigen Lichtbündel bestrahlt, dessen Einstrahlwinkel im Bereich der Flüssigkristall-Anzeige 26 örtlich variiert.

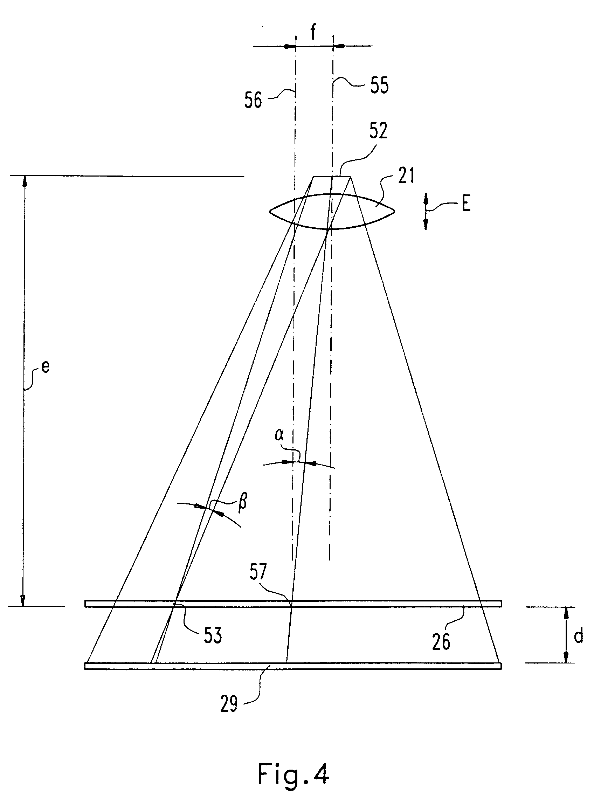

Fig. 4 zeigt die optischen Gegebenheiten der Anordnung von Figur 2. Das Objektiv 21 bewirkt, daß die Beleuchtung der Flüssigkristall-Anzeige 26 mit etwa kegelförmigem Licht erfolgt. Das Zentrum 57 der Flüssigkristall-Anzeige 26 ist gegenüber der optischen Achse 55 um einen Abstand f nach links verschoben. Hierdurch wird erreicht, daß das Licht auf das Zentrum 57 der Flüssigkristall-Anzeige 26 unter einem Winkel $\alpha = 5$° einstrahlt. Das erreichbare Kontrastverhältnis der auf dem LCD 26 dargestellten Bilder ist deshalb in der Mitte des LCDs 26 maximal und nimmt zu den Rändern hin leicht ab. Die Achse 56 gibt die Mittelsenkrechte der Flüssigkristall-Anzeige 26 an. Aufgrund der divergenten Lichtstrahlen und des Abstandes d zwischen Flüssigkristall-Anzeige 26 und Fotopapier 29 wird jeder Bildpunkt 53, der auf der Anzeige 26 dargestellt wird, etwas vergrößert auf das Fotopapier 29 belichtet. Diese Divergenz ist vorteilhaft bei der Belichtung in Bildbereichen mit hoher Dichte, weil dadurch eine gewisse Überdeckung der Belichtungspunkte am Papier erfolgen kann. Der Divergenzwinkel β hängt ab von der Ausdehnung der Austrittspupille 52 des Objektivs 22 und vom Abstand der Austrittspupille 52 von der Anzeige 26. Durch Verschiebung einzelner Glieder des Zoom-Objektivs 21 entlang der Richtung E läßt sich der Divergenz-Winkel β bei der oben beschriebenen Anordnung im Bereich von ca. 1 bis 2 ° variieren. Bei der oben beschriebenen Anwendung in einem fotografischen Kopiergerät läßt sich damit das Zoom-Objektiv 21 doppelt nutzen; einerseits zur Erzielung unterschiedlicher Vergrößerung bei einem Standard-Kopiervorgang und andererseits zur Einstellung der Divergenz des Beleuchtungslichts bei der Ausgabe elektronischer Bildsignale durch die Anzeigeeinrichtung 26.

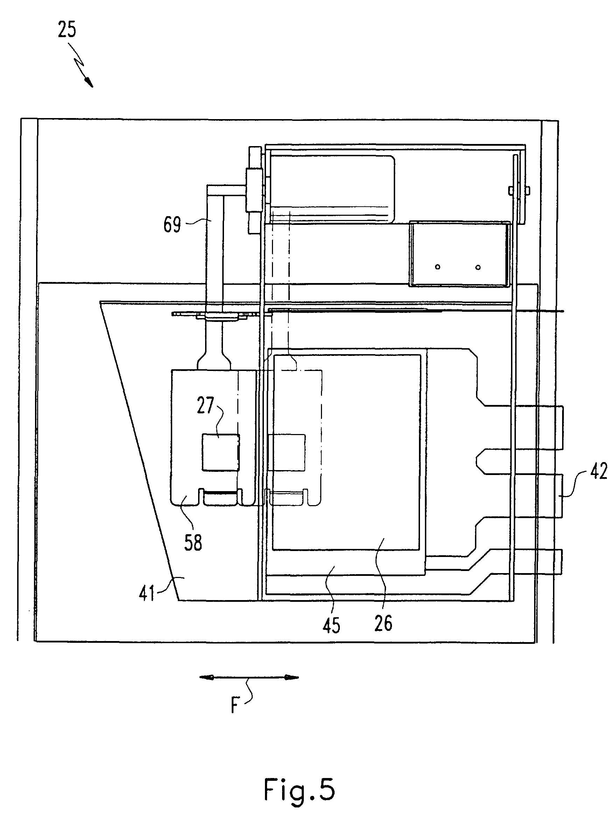

In Fig. 5 ist die Beleuchtungseinrichtung 25 im Detail dargestellt. Sie ist in diesem Ausführungsbeispiel besonders angepaßt an die Verwendung in einem fotografischen Kopiergerät. Vor der Maske 45 der Beleuchtungsvorrichtung 25 befindet sich zusätzlich zur Anzeigevorrichtung 26 noch ein Test-Negativ 27, welches in einem Rahmen 58 gehaltert ist. Es dient dazu, das fotografische Kopiergerät hinsichtlich seiner Kopiereinstellungen zu kalibrieren. Das Test-Negativ 27 wird dazu im Kontaktkopierverfahren auf das fotografische Material 29 kopiert. Das kopierte Bild wird anschließend fotochemisch entwickelt und densitometrisch vermessen.

Um das Test-Negativ 27 in einem Test-Modus des fotografischen Kopiergeräts in die Kopierstellung zu bringen, wird es aktiv mittels des Hebelarms 69 nach unten zum Papier 29 geschwenkt und dabei gleichzeitig entlang Richtung F in die optische Achse 55 verschoben. Mittels einer geeigneten Zwangsführung werden diese beiden Bewegungen synchron durch nur einen Antrieb bewirkt. Es wird also eine kombinierte Rotations-Translations-Bewegung ausgeführt. Fig. 5 zeigt sowohl die durch passive Mitführung erzielte Ruhestellung des Negativs 27 (links, durchgezogene Linien) als auch dessen Stellung im Test-Modus (rechts, gestrichelte Linien) nach einer aktiven Bewegung.

Im Testbelichtungs-Modus befindet sich das Test-Negativ 27 im Bereich der optischen Achse 55. Das LCD 26 bleibt in diesem Modus aus dem Beleuchtungsstrahlengang ausgeschwenkt, so daß das Test-Negativ 27 ungehindert beleuchtet werden kann.

In der durch passive Mitführung erzielten Ruhestellung liegt das Testnegativ 27 unterhalb der Befestigungsplatte 41, so daß das Testnegativ 27 eine LCD-Belichtung nicht beeinflußt. Die in Fig. 2 gezeigte Befestigungsplatte 41 weist dazu einen erhobenen Bereich 82 auf, unter dem das Test-Negativ 27 in der Ruhestellung zu liegen kommt.

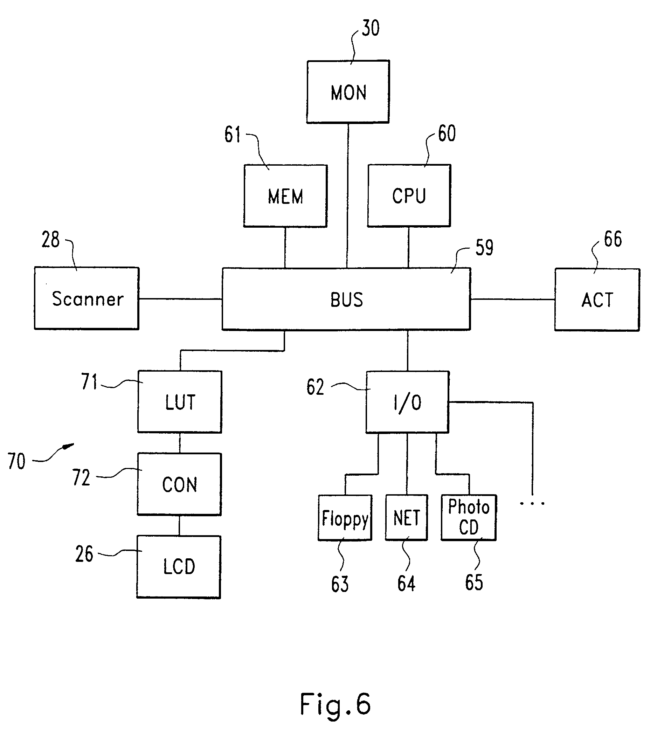

In Fig. 6 ist ein Blockschaltbild wichtiger elektronischer Komponenten des Gesamtgerätes gezeigt. Die Komponenten sind über eine zentrale Datenleitung 59 (BUS) miteinander verbunden. Eine zentrale Rechen- und Steuereinheit 80 (CPU) steuert die Abläufe. Die vom Scanner 28 oder von externen Bildquellen stammenden Bildsignale werden im Speicher 61 (MEM) gespeichert. Eine Steuerkarte 66 dient dazu, alle Aktoren wie Drehmagneten, Schritt- oder Gleichstrommotoren zur Positionierung, insbesondere Drehung und Verschiebung von Komponenten anzusteuern. Über eine Ein/Ausgabe-Schnittstelle 62 sind Datenein- und Ausgaben über ein Diskettenlaufwerk 63, eine Netzwerk-Karte 64, eine Foto-CD, eineTastatur, Maus, externe Scan-Einrichtungen o. ä. möglich.

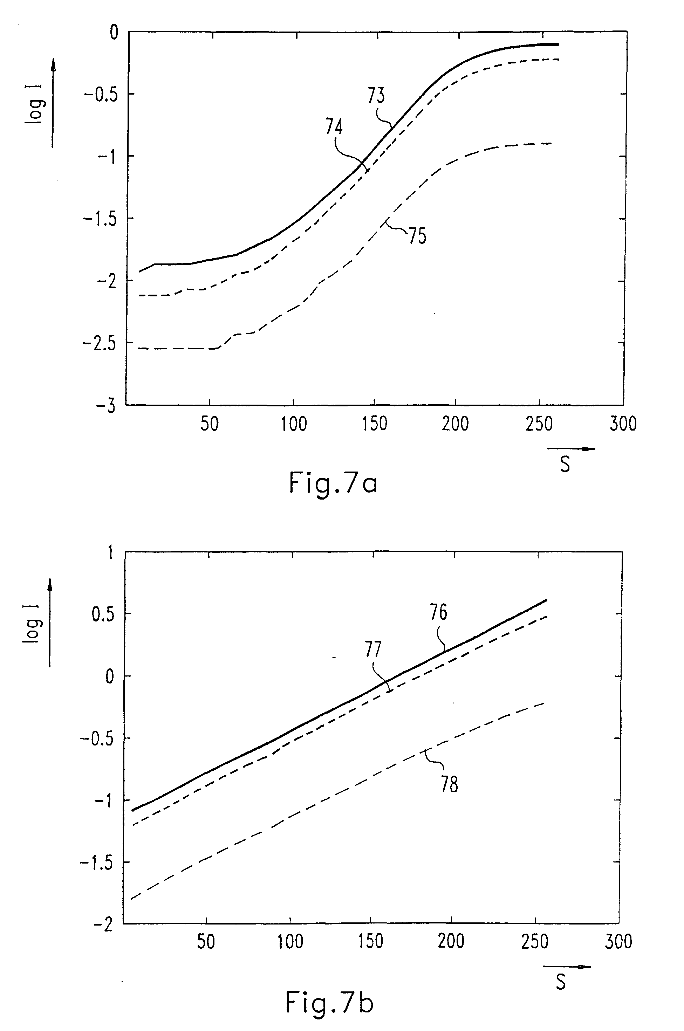

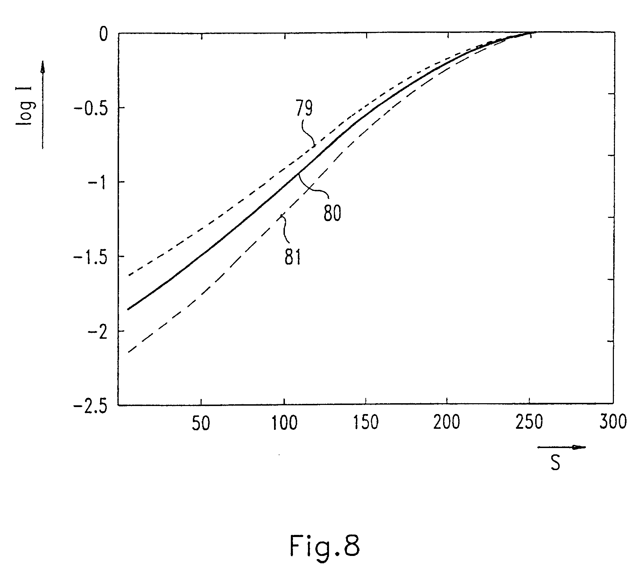

Zur Ansteuerung der Flüssigkristall-Anzeige 26 werden die Bildsignale modifiziert. Diese Modifikation kann mittels gespeicherter Look-Up-Tabellen und der zentralen Rechenstufe 60 geschehen oder - wie in Fig. 6 gezeigt - mittels seriell geschalteter Pipeline-Bildverarbeitungskomponenten 70. Bei der in Fig. 6 gezeigten Ausführungsform durchlaufen die Bildsignale zunächst eine Look-Up-Tabelle 71 und dann eine Kontrast-Modifikationsstufe 72. Die Funktionen dieser beiden Komponenten werden nachfolgend anhand der Fig. 7 und 8 näher erläutert.

Fig. 7a zeigt gemessene, relative Intensitäten I verschiedenfarbigen Lichts, das die Flüssigkeitsanzeige 26 bei Ansteuerung von Bildsignalen S mit digitalisierten Werten zwischen 0 und 255 durchdringt. Kurve 73 stellt die Intensität von rotem Licht dar, wenn der Cyan-Filter 34 aus dem Kopierstrahlengang ausgeschwenkt ist, Kurve 74 zeigt die transmissive grüne Lichthelligkeit bei Ausschwenken des Magenta-Filters 33 und Kurve 75 die entsprechende Helligkeit des blauen Lichts bei Ausschwenken des Gelb-Filters 32. Anhand dieser Transmissionskennlinien 73, 74 und 75 ist zu erkennen, daß die Flüssigkristall-Anzeige 26 eine nicht lineare Charakteristik hat. Eine Aufgabe für die oben genannten Bildverarbeitungs-Komponenten ist es, diese nicht linearen LCD-Kennlinien auszugleichen, d. h. im logarithmischen Intensitäts-Maßstab eine lineare Wiedergabe der Eingangssignale S auf der LCD-Anzeige zu ermöglichen. Die Look-Up-Tabellen (LUT) der Bildverarbeitungsstufe 71 beinhalten deshalb getrennt für jeden Farbbereich inverse Tabellen-Funktionen zu den Kennlinien 73, 74, 75.

Fig. 7b zeigt die Wirkung der Bildverarbeitungsstufe 71. Die mathematische Bedingung für die in der Stufe 71 gespeicherten Look-Up-Tabellen lautet:

$$L(S) = f^{-1}(g(S)),$$

wobei L die in der Look-Up-Table gespeicherte Funktion, g einen gewünschten - insbesondere linearen - Dichteverlauf der Anzeige 26 und f die jeweils gemäß Fig. 7a ermittelte Kennlinie der Anzeige 26 bezeichnet. Dadurch, daß die vom System-Bus 59 übernommenen Bildsignale mit der jeweiligen Look-Up-Tabelle multipliziert wurden, ist die Darstellung der Bildsignale auf dem LCD 26 gemäß den Kurven 76 für Cyan, 77 für Magenta und 78 für Gelb linear.

Es ist klar, daß innerhalb der Bildverarbeitungsstufe 70 zur Anpassung der Bildsignale an einen bestimmten Aufzeichnungsträgers 29 weitere Modifikationen der Bildsignale erfolgen, wobei die Signale dem jeweiligen Dichteverlauf des Aufzeichnungsträgers angepaßt werden. Dabei kann auch eine Inversion der Bildsignale von negativ auf positiv oder umgekehrt erfolgen.

Fig. 8 zeigt verschiedene Helligkeitsverläufe, die in einer Anordnung gemäß Fig. 2 in der Bildmitte (Kennlinie 81), am linken Rand der Anzeige 26 (Kennlinie 80) sowie an deren rechtem rechten Bildrand (Kennlinie 79) meßbar sind. Die zu Fig. 4 genannte Bedingung, daß das Licht idealerweise genau mit 5 ° auf die Flüssigkristall-Anzeige 26 einstrahlt, ist also nur bei der Aufnahme gemäß Kennlinie 81 erfüllt. Der Kontrast in der Bildmitte ist daher größer als an den Bildrändern.

Um diese Kontrastunterschiede auszugleichen, wird bei einer Belichtung mit der in Fig. 6 gezeigten Bildverarbeitungsstufe 70 die Anzeige 26 bereichsweise, insbesondere zeilen- oder spaltenweise unterschiedlich angesteuert. Dazu dient die Kontraststufe 72. Sie modifiziert die Bildsignale in Abhängigkeit von der relativen Lage der Bildpunkte zur Bildmitte so, daß ihr Kontrast erhöht oder erniedrigt wird. Die Stufe 72 bewirkt damit, daß die Kontrastdarstellung auf der Anzeige 26 über die gesamte Bildfläche homogen ist.

Die Erfindung wurde anhand einiger Ausführungsbeispiele, insbesondere in einer integrierten Anwendung innerhalb eines fotografischen Minilabor-Geräts, beschrieben. Dabei ist klar, daß insbesondere die Belichtungsvorrichtung 25 auch in anderen Geräten oder separat zur Ausgabe elektronischer Bildsignale geeignet ist. Statt des angegebenen fotografischen Colornegativ-Papiers sind selbstverständlich auch andere lichtempfindliche Aufzeichnungsträger wie Colorpositiv-Papier oder auch transparentes lichtempfindliches Material oder eine lichtempfindliche Druckplatte verwendbar. Statt einer Flüssigkristall-Anzeige ist auch eine transmissive Festkörper-Anzeigevorrichtung, beispielsweise auf der Basis von PLZT-Kristallen oder eine sogenannte Lichtventilanordnung möglich oder auch eine Mikro-Shutter-Anordnung, soweit die Größe und Auflösung der entsprechenden Anzeigeelemente dem gewünschten Anwendungszweck entsprechen. Der Fachmann ist ohne weiteres in der Lage, hierzu vielfache Möglichkeiten anzugeben. Statt Flächen-Anzeigeelementen können auch zeilenweise Anzeigeelemente zur Kontaktbelichtung verwendet werden, wobei dann zur Ausgabe zweidimensionaler Bilder eine zeilenweise Belichtung mit einem zeilenweisen Transport des Aufzeichnungsträgers erfolgt.

## Patentansprüche

1. Verfahren zur Ausgabe von Bildinformationen auf lichtempfindliches Aufzeichnungsmaterial (29) und zum Kopieren einer Bildvorlage (49) eines fotografischen Films (24) auf lichtempfindliches Aufzeichnungsmaterial, in dem

   die Bildvorlage mittels eines Scanners optoelektronisch abgetastet wird,
   die Bildvorlage von einer Lichtquelle (31) in Richtung zum lichtempfindlichen Aufzeichnungsmaterial (29) durchstrahlt wird, wodurch ein optischer Strahlengang festgelegt wird, und in dem
   ein transmissives Anzeigeelement (26), insbesondere eine Flüssigkristall-Anordnung, LCD, mit Bildsignalen angesteuert wird, die die Bildinformationen enthalten, wobei
   das transmissive Anzeigeelement während der Ausgabe der Bildinformationen so nahe an dem Aufzeichnungsmaterial angeordnet wird, daß auf dem Aufzeichnungsmaterial ein scharfes Bild erzeugt wird, ohne daß fokussierende optische Mittel zwischen Anzeigeelement (26) und Aufzeichnungsmaterial (29) positioniert werden, und wobei
   das Anzeigeelement während der Ausgabe der Bildinformationen in demselben optischen Strahlengang liegt, in dem auch eine Bildvorlage während ihres Kopierens liegt,

   **dadurch gekennzeichnet, daß**

   die elektronischen Bildsignale Bildinformationen enthalten, die in der kopierbaren Bildvorlage (49) enthalten sind und die mittels des Scanners ermittelt wurden, und daß
   dieselbe Lichtquelle, die zum Durchstrahlen der Bildvorlage vorgesehen ist, auch zum Durchstrahlen des transmissiven Anzeigeelementes (26) in Richtung zum lichtempfindlichen Aufzeichnungsmaterial (29) benutzt wird.

2. Verfahren nach Anspruch 1, weiterhin **dadurch gekennzeichnet, daß** das Anzeigeelement (26) zur Ausgabe des Bildes in die Beleuchtungsposition eingeschwenkt wird.

3. Verfahren nach Anspruch 1 oder 2, weiterhin **dadurch gekennzeichnet, daß** das Anzeigeelement (26) von einer weißen Lichtquelle (31) beleuchtet und seriell unter Zwischenschaltung optischer Filter (32, 33, 34) jeweils eine vorbestimmte Zeit mit drei Grundfarben beleuchtet wird.

**4.** Verfahren nach einem der vorhergehenden Ansprüche, weiterhin **dadurch gekennzeichnet, daß** das Bild ein sogenanntes Indexbild ist, bei dem eine vorbestimmte Anzahl von Bildvorlagen eines fotografischen Films (10, 24) in einer vorgegebenen Anordnung ausgegeben wird.

**5.** Verfahren nach Anspruch 4, weiterhin **dadurch gekennzeichnet, daß** das Indexbild in Abhängigkeit von der Anzahl und/oder vom Format des zu erzeugenden Indexbildes entweder in einem einzigen Belichtungsvorgang oder in mehreren Belichtungsvorgängen erzeugt wird, wobei im Falle mehrerer Belichtungsvorgänge zwischen den Belichtungsvorgängen ein Transport des Aufzeichnungsträgers quer zu einer Bildseite derart erfolgt, daß sich die beiden Belichtungsvorgänge nicht oder nur in einem vorgegebenen Bereich des Aufzeichnungsträgers überschneiden.

**6.** Fotografisches Kopiergerät zur Ausgabe von Bildinformationen auf lichtempfindlichem Aufzeichnungsmaterial (29) und zum Kopieren einer Bildvorlage (49) eines fotografischen Films (24) auf lichtempfindliches Aufzeichnungsmaterial, mit

einem Scanner zum optoelektronischen Abtasten der Bildvorlage,

einer Lichtquelle (31) zum Durchstrahlen der Bildvorlage in Richtung zum Aufzeichnungsmaterial (29), so daß ein optischer Strahlengang festgelegt ist, und mit

einem zweidimensionalen, transmissiven Anzeigeelement (26), insbesondere einer Flüssigkristall-Anzeige, LCD, die mit Bildsignalen ansteuerbar ist, die die Bildinformationen enthalten, wobei

das Anzeigeelement (26) zur Ausgabe der Bildinformationen so nahe an dem Aufzeichnungsmaterial (29) positionierbar ist, daß auf dem Aufzeichnungsmaterial (29) ein scharfes Bild erzeugt wird, ohne daß fokussierende optische Mittel zwischen dem Anzeigeelement (26) und dem Aufzeichnungsmaterial (29) angeordnet sind, und wobei

das Anzeigeelement zur Ausgabe der Bildinformationen in demselben optischen Strahlengang positioniert wird, in dem auch die Bildvorlage während ihres Kopierens liegt,

**dadurch gekennzeichnet, daß**

die elektronischen Bildsignale Bildinformationen enthalten, die in der kopierbaren Bildvorlage (49) enthalten sind und die mittels des Scanners ermittelt wurden, und daß die Lichtquelle so angeordnet ist, daß sie zur Ausgabe der Bildinformationen mittels des Anzeigeelementes (26) zum Durchstrahlen desselben benutzbar ist.

**7.** Fotografisches Kopiergerät nach Anspruch 6, weiterhin **dadurch gekennzeichnet, daß** Schwenkmittel (40, 43, 44) vorgesehen sind, mit denen das Anzeigeelement (26) in die Belichtungsposition gebracht wird.

**8.** Fotografisches Kopiergerät nach Anspruch 7, weiterhin **dadurch gekennzeichnet, daß** die Schwenkmittel (40, 43, 44) einen Antriebsmotor (40) und eine lichtundurchlässige Platte (41) umfassen.

**9.** Fotografisches Kopiergerät nach einem der Ansprüche 6 bis 8, weiterhin **dadurch gekennzeichnet, daß** es ein transmissives, insbesondere negatives, Testbild (27) aufweist, das mittels eines Positionierungsmittels (58, 69) in dem optischen Strahlengang positionierbar ist.

**10.** Fotografisches Kopiergerät nach Anspruch 9, weiterhin **dadurch gekennzeichnet, daß** das Testbild (27) an einer Halterung (69) montiert ist, die sowohl passiv durch die Schwenkmittel (40, 43, 44) gemeinsam mit der Platte (41) zwischen einer Position außerhalb des Sichtstrahlengangs der Lichtquelle (31) und einer Ruheposition innerhalb des Lichtstrahlengangs schwenkbar ist als auch aktiv, insbesondere durch eine kombinierte Rotations-Translationsbewegung, zwischen der Position außerhalb des Strahlengangs und einer Kopierstellung innerhalb des Lichtstrahlengangs, in der das Testbild (27) auf das Aufzeichnungsmaterial (29) kopierbar ist.

**11.** Fotografisches Kopiergerät nach einem der Ansprüche 6 bis 10, weiterhin **dadurch gekennzeichnet, daß** das Anzeigeelement (26) eine Größe von mindestens 50 x 40 mm, insbesondere 118 x 89 mm, und eine Auflösung von mindestens 500 x 300 Punkten, insbesondere 1024 x 768 Punkten, hat.

**12.** Fotografisches Kopiergerät nach einem der Ansprüche 6 bis 11, weiterhin **dadurch gekennzeichnet, daß** das Anzeigeelement (26) in einem vollständig umlaufenden, lichtundurchlässigen Rahmen (45) gehaltert ist.

**13.** Fotografisches Kopiergerät nach einem der Ansprüche 6 bis 12, weiterhin **dadurch gekennzeichnet, daß**

a) zwischen einer Bühne (12) zur Aufnahme einer Kopiervorlage (24) und dem Aufzeichnungsmaterial (29) ein Zoom-Objektiv (22) vorgesehen ist,

b) zwischen der Lichtquelle (31) und dem Zoom-Objektiv (22) eine Streufolie (39) vorgesehen ist und

c) daß Lichtquelle (31), Zoom-Objektiv (22) und Anzeigeelement (26) derart relativ zueinander einstellbar sind, daß die Lage und Größe der Austrittspupille (52) des Objektivs (22) zu einer divergenten Beleuchtung des Anzeigeeolements (26) mit einem vorgegebenen Divergenzwinkel, insbesondere im Bereich zwischen einem und zwei Grad, führt.

**14.** Fotografisches Kopiergerät nach Anspruch 13, weiterhin **dadurch gekennzeichnet, daß** das Anzeigeelement (26) gegenüber der durch Lichtquelle (31) und Zoom-Objektiv (22) verlaufenden optischen Achse lateral versetzt ist.

## Claims

**1.** A method for outputting image information onto photosensitive recording material (29) and for printing an original image (49) from a photographic film (24) onto photosensitive recording material, in which

> the original image is scanned optoelectronically by means of a scanner,
> light is radiated through the original image from a light source (31) in the direction of the photosensitive recording material (29), whereby an optical ray path is established, and in which
> a transmissive display element (26), in particular a liquid crystal arrangement, LCD, is actuated with image signals containing the image information, wherein
> the transmissive display element is arranged so close to the recording material during output of the image information that a sharp image is produced on the recording material without optical focussing means being positioned between display element (26) and recording material (29), and wherein
> the display element lies in the same optical ray path during output of the image information in which an original image lies during printing thereof,

> **characterised in that**

> the electronic image signals contain image information which are contained in the printable original image (49) and were detected by means of the scanner, and **in that**
> the same light source as is provided to radiate through the original image is also used to radiate through the transmissive display element (26) in the direction of the photosensitive recording material (29).

**2.** A method according to claim 1, further **characterised in that** the display element (26) is swivelled into the illumination position for output of the image.

**3.** A method according to claim 1 or claim 2, further **characterised in that** the display element (26) is illuminated by a white light source (31) and serially illuminated with three primary colours in each case for a set time with the interpolation of optical filters (32, 33, 34).

**4.** A method according to one of the preceding claims, further **characterised in that** the image is an "index image", in which a predetermined number of original images from a photographic film (10, 24) is output in a set arrangement.

**5.** A method according to claim 4, further **characterised in that**, depending on the number and/or the size of the index image to be produced, the index image is produced either in a single exposure process or in a plurality of exposure processes, wherein, in the case of a plurality of exposure processes, the recording substrate is conveyed perpendicularly to one image side between exposure processes in such a way that two exposure processes do not overlap or overlap only in a set area of the recording substrate.

**6.** A photographic printer for outputting image information onto photosensitive recording material (29) and printing an original image (49) from a photographic film (24) onto photosensitive recording material, having

> a scanner for optoelectronic scanning of the original image,
> a light source (31) for radiating light through the original image in the direction of the recording material (29), such that an optical ray path is established, and having
> a two-dimensional, transmissive display element (26), in particular a liquid crystal display, LCD, which may be actuated with image signals containing the image information, wherein
> the display element (26) may be positioned so close to the recording material (29) during output of the image information that a sharp image is produced on the recording material (29) without optical focussing means being arranged between the display element (26) and the recording material (29), and wherein
> the display element lies in the same optical ray path during output of the image information in which the original image lies during printing thereof,

**characterised in that**

the electronic image signals contain image information which are contained in the printable original image (49) and were detected by means of the scanner, and **in that** the light source is arranged in such a way that it may be used to radiate light through the display element (26) to output the image information by means thereof.

7. A photographic printer according to claim 6, further **characterised in that** swivelling means (40, 43, 44) are provided with which the display element (26) is moved into the exposure position.

8. A photographic printer according to claim 7, further **characterised in that** the swivelling means (40, 43, 44) comprise a drive motor (40) and a light-proof plate (41).

9. A photographic printer according to one of claims 6 to 8, further **characterised in that** it comprises a transmissive, in particular negative, test image (27), which may be positioned in the optical ray path by means of a positioning means (58, 69).

10. A photographic printer according to claim 9, further **characterised in that** the test image (27) is mounted on a holder (69) which may be swivelled both passively by the swivelling means (40, 43, 44) together with the plate (41) between a position outside the light ray path of the light source (31) and a rest position within the light ray path and actively, in particular by a combined rotational/translational movement, between the position outside the ray path and a printing position within the light ray path, in which the test image (27) may be printed onto the recording material (29).

11. A photographic printer according to one of claims 6 to 10, further **characterised in that** the display element (26) is at least 50 x 40 mm, in particular 118 x 89 mm, in size and exhibits a resolution of at least 500 x 300 dots, in particular 1024 x 768 dots.

12. A photographic printer according to one of claims 6 to 11, further **characterised in that** the display element (26) is mounted in a fully circumferential, light-proof frame (45).

13. A photographic printer according to one of claims 6 to 12, further **characterised in that**

    a) a zoom lens (22) is provided between a platform (12) for accommodating an original image support (24) and the recording material (29),

    b) a diffusing film (39) is provided between the light source (31) and the zoom lens (22) and

    c) light source (31), zoom lens (22) and display element (26) may be adjusted relative to one another in such a way that the position and size of the outlet aperture (52) of the lens (22) results in divergent illumination of the display element (26) with a set divergence angle, ranging in particular between one and two degrees.

14. A photographic printer according to claim 13, further **characterised in that** the display element (26) is offset laterally relative to the optical axis extending through the light source (31) and the zoom lens (22).

**Revendications**

1. Procédé pour l'édition d'informations d'image sur du matériel d'enregistrement (29) sensible à la lumière et pour reproduire un modèle d'image (49) d'un film photographique (24) sur du matériel d'enregistrement sensible à la lumière, dans lequel

    le modèle d'image est balayé au moyen d'un scanneur de façon opto-électronique, le modèle d'image est irradié par une source de lumière (31) en direction du matériel d'enregistrement (29) sensible à la lumière, ce qui permet de définir une trajectoire de faisceau optique, et dans lequel un élément d'affichage par transmission (26), en particulier un dispositif à cristaux liquides, LCD, est commandé avec des signaux d'image qui contiennent des informations d'image, l'élément d'affichage par transmission étant disposé, pendant l'édition des informations d'image, si près du matériel d'enregistrement qu'une image nette est générée sur le matériel d'enregistrement, sans que des moyens optiques de mise au point soient positionnés entre l'élément d'affichage (26) et le matériel d'enregistrement (29), et l'élément d'affichage se situant pendant l'édition des informations d'image dans la même trajectoire de faisceau optique que celle où se trouve également un modèle d'image pendant sa reproduction,

    **caractérisé en ce que**

    les signaux d'image électroniques contiennent des informations d'image qui sont contenues dans le modèle d'image (49) reproductible et sont déterminées au moyen du scanneur, et **en ce que**

la même source de lumière, qui est prévue pour irradier le modèle d'image, est utilisée également pour irradier l'élément d'affichage (26) par transmission en direction du matériel d'enregistrement (29) sensible à la lumière.

2. Procédé selon la revendication 1, **caractérisé en outre en ce que** l'élément d'affichage (26) est amené par pivotement dans la position d'éclairage pour l'édition de l'image.

3. Procédé selon la revendication 1 ou 2, **caractérisé en outre en ce que** l'élément d'affichage (26) est éclairé par une source de lumière (31) blanche et est éclairé successivement respectivement un temps prédéfini avec trois couleurs de base en intercalant des filtres optiques (32, 33, 34).

4. Procédé selon l'une quelconque des revendications précédentes, **caractérisé en outre en ce que** l'image est une image dite index, où un nombre prédéfini de modèles d'image d'un film photographique (10, 24) est édité dans un arrangement prédéfini.

5. Procédé selon la revendication 4, **caractérisé en outre en ce que** l'image index est générée en fonction du nombre et/ou du format de l'image index à générer soit en une seule opération d'éclairage, soit en plusieurs opérations d'éclairage, un transport du support d'enregistrement s'effectuant transversalement à un côté d'image entre les opérations d'éclairage dans le cas de plusieurs opérations d'éclairage, de telle sorte que les deux opérations d'éclairage ne se recouvrent pas ou seulement dans une plage prédéfinie du support d'enregistrement.

6. Tireuse photographique pour l'édition d'informations d'image sur du matériel d'enregistrement (29) sensible à la lumière et pour la reproduction d'un modèle d'image (49) d'un film photographique (24) sur du matériel d'enregistrement sensible à la lumière, avec

un scanneur pour le balayage opto-électronique du modèle d'image,
une source de lumière (31) pour l'irradiation du modèle d'image en direction du matériau d'enregistrement (29), de sorte qu'une trajectoire de faisceau optique est définie, et avec
un élément d'affichage (26) de transmission à deux dimensions, en particulier un affichage à cristaux liquides, LCD, qui peut être commandé avec des signaux d'image qui contiennent les informations d'image,

l'élément d'affichage (26) étant positionné pour l'édition des informations d'image si près du matériel d'enregistrement (29) qu'une image nette est générée sur le matériel d'enregistrement (29) sans que des moyens optiques de mise au point soient positionnés entre l'élément d'affichage (26) et le matériel d'enregistrement (29), et
l'élément d'affichage étant positionné pour l'édition des informations d'image dans la même trajectoire de faisceau optique que celle où se trouve également le modèle d'image pendant sa reproduction,

**caractérisé en ce que**

les signaux d'image électroniques contiennent des informations d'image qui sont contenues dans le modèle d'image (49) reproductible et sont déterminées au moyen du scanneur, et **en ce que**

la source de lumière est disposée de telle façon qu'elle peut être utilisée pour l'édition des informations d'image au moyen de l'élément d'affichage (26) pour l'irradiation de celui-ci.

7. Tireuse photographique selon la revendication 6, **caractérisée en outre en ce que** des moyens de pivotement (40, 43, 44) sont prévus, avec lesquels l'élément d'affichage (26) est amené dans la position d'éclairage.

8. Tireuse photographique selon la revendication 7, **caractérisée en outre en ce que** les moyens de pivotement (40, 43, 44) comprennent un moteur d'entraînement (40) et une plaque (41) imperméable à la lumière.

9. Tireuse photographique selon l'une quelconque des revendications 6 à 8, **caractérisée en outre en ce qu'**elle présente une image test (27) de transmission, en particulier négative, qui peut être positionnée au moyen d'un moyen de positionnement (58, 69) dans la trajectoire de faisceau optique.

10. Tireuse photographique selon la revendication. 9, **caractérisée en outre en ce que** l'image test (27) est montée sur un support (69), qui peut pivoter d'une part de façon passive grâce aux moyens de pivotement (40, 43, 44) conjointement avec la plaque (41) entre une position à l'extérieur de la trajectoire de faisceau visible de la source lumineuse (31) et une position de repos à l'intérieur de la trajectoire de faisceau visible, et d'autre part de façon active, en particulier par un mouvement mixte de rotation et de translation, entre la position à l'extérieur de la trajectoire du faisceau et une position de reproduction à l'intérieur de la trajectoire du faisceau de lumière, dans laquelle l'image test (27) peut être reproduite sur le matériau d'enregistrement (29).

11. Tireuse photographique selon l'une quelconque des revendications 6 à 10, **caractérisée en outre en ce que** l'élément d'affichage (26) a une grandeur d'au moins 50 x 40 mm, en particulier 118 x 89 mm, et une résolution d'au moins 500 x 300 points, en particulier 1024 x 768 points.

12. Tireuse photographique selon l'une quelconque des revendications 6 à 11, **caractérisée en outre en ce que** l'élément d'affichage (26) est maintenu dans un cadre complètement enveloppant et imperméable à la lumière (45).

13. Tireuse photographique selon l'une quelconque des revendications 6 à 12, **caractérisée en ce que**

a) un objectif zoom (22) est prévu entre une estrade (12) pour le logement d'un original à reproduire (24) et le matériau d'enregistrement (29).
b) un film diffusant (39) est prévu entre la source de lumière (31) et le zoom (22) et
c) **en ce que** la source de lumière (31), l'objectif zoom (22) et l'élément d'affichage (26) peuvent être réglés les uns par rapport aux autres de façon que la position et la grandeur de la pupille de sortie (52) de l'objectif (22) entraînent un éclairage divergent de l'élément d'affichage (26) avec un angle de divergence prédéfini, en particulier dans la plage entre un et deux degrés.

14. Tireuse photographique selon la revendication 13, **caractérisée en outre en ce que** l'élément d'affichage (26) est décalé par rapport à l'axe optique passant par la source lumineuse (31) et l'objectif zoom (22).

Fig.1

Fig.2

Fig.3

Fig.4

Fig.5

Fig.6

Fig.7a

Fig.7b

Fig.8